(19) Europäisches Patentamt
European Patent Office
Office européen des brevets

(11) EP 0 546 185 B1

(12) EUROPEAN PATENT SPECIFICATION

(45) Date of publication and mention of the grant of the patent:
**23.09.1998 Bulletin 1998/39**

(21) Application number: **92910445.3**

(22) Date of filing: **26.05.1992**

(51) Int Cl.[6]: **C08L 81/02**, C08L 101/00, C08G 75/02

(86) International application number:
**PCT/JP92/00681**

(87) International publication number:
**WO 92/21723 (10.12.1992 Gazette 1992/31)**

# (54) POLYARYLENE SULFIDE RESIN COMPOSITION

POLYARYLENSULFIDHARZ-ZUSAMMENSETZUNG

COMPOSITION RESINEUSE DE SULFURE DE POLYARYLENE

(84) Designated Contracting States:
**BE CH DE FR GB IT LI NL SE**

(30) Priority: **31.05.1991 JP 155226/91**

(43) Date of publication of application:
**16.06.1993 Bulletin 1993/24**

(73) Proprietor: **IDEMITSU PETROCHEMICAL CO., LTD.**
**Minato-ku, Tokyo 108 (JP)**

(72) Inventors:
- **WAKABAYASI, Makoto**
  **Idemitsu Petrochem.Co., Ltd.**
  **Chiba-ken 299-01 (JP)**
- **KOSAKA, Wataru**
  **Idemitsu Petrochemical Co., Ltd.**
  **Ichihara-shi Chiba-ken 299-01 (JP)**

(74) Representative: **Hoeger, Stellrecht & Partner**
**Uhlandstrasse 14 c**
**70182 Stuttgart (DE)**

(56) References cited:
**EP-A- 0 044 184**
**EP-A- 0 302 218**
**EP-A- 0 346 795**
**EP-A- 0 353 717**
**EP-A- 0 357 045**
**EP-A- 0 398 052**
**DE-A- 3 813 919**
**JP-A- 1 074 265**
**JP-A- 2 294 331**
**JP-A-57 051 739**
**JP-A-62 141 064**

- **PATENT ABSTRACTS OF JAPAN vol. 13, no. 595 (C-672)27 December 1989 & JP-A-1 252 657 ( TORAY IND INC ) 9 October 1989**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 546 185 B1

## Description

### Field of Technology

The present invention relates to a polyarylene sulfide resin composition useful as a molding material, which possesses superior mechanical strength, heat resistance, long-term stability, and chemical resistance, exhibits excellent fluidity and moldability, and produces only an extremely small amount of burrs during injection molding.

### Background Art

Polyarylene sulfides, such as polyphenylene sulfide and the like, are engineering plastics having excellent heat resistance, chemical resistance, dimension stability, and the like. They are widely used as materials for molding, for example, electric and electronic parts, injection-mold precision articles, films, and the like.

Conventionally, a heat cross-linked type and a linear high molecular weight type are known as polyarylene sulfides. Both types, however, have drawbacks mentioned below.

Specifically, since heat cross-linked type polyarylene sulfides are polymerized materials produced by the heat treatment of polymer powder, they contain super-high-molecular-weight components and polymers are conspicuously colored with poor whiteness. In addition, they are very fragile because of foaming due to heat decomposition, excessive branching or cross-linking, and unhomogeneity. Thus, the resins are not only difficult to use as they are, but also hard to modify a color tone due to their conspicuous coloration. Their applications are, therefore, extremely limited.

Linear high molecular weight type polyarylene sulfides, on the other hand, are superior as compared with the heat cross-linked type in terms of their dynamic strength, especially in their tenacity. They, however, crystallize more slowly and exhibit a lower melting tension (stretch viscosity). Because of this, they are apt to produce burrs during molding.

EP 0 353 717 discloses that a resin having a high Newtonian behaviour and a high degree of branching are advantageous because burrs are unlikely to occur during injection moulding. However, it does not suggest to use liquid crystal compounds in order to achieve a further improvement in processability.

Also EP 0 398 052 only suggests to add a liquid crystal material to a polyarylene sulfide resin in order to reduce the melt viscosity thereof, and not to produce only an extremely small amount of burrs during injection molding.

A resin composition comprising polyarylene sulfide, a liquid crystalline polymer, and a filler has been proposed in EP 0 044 184. Even though this filler-containing resin composition exhibits a certain degree of controlled burr production during injection molding, the effect is not necessarily satisfactory. Specifically, it is silent about the significance of the branch index and refers only to a very broad range of liquid crystal components.

The present invention has been completed in view of the above-mentioned situation and has an object of providing a polyarylene sulfide resin composition possessing superior mechanical strength, heat resistance, long-term stability, and chemical resistance, exhibiting excellent fluidity and moldability, and useful as a molding material producing an extremely small amount of burrs during injection molding.

### Disclosure of the Invention

In order to achieve the above object, the present invention provides a polyarylene sulfide resin composition characterized by comprising the following components (A), (B), and (C):

(A) 99-41% by weight, based on the total amount of components (A) and (B), of polyarylene sulfide (PAS) having a melting viscosity of 50-40,000 poise and a branch index (N) of 1.05 or above as defined by the following formula (1),

$$N = \frac{1 + \left.\dfrac{\partial \log \eta_L}{\partial \log \dot{\gamma}}\right|_{\dot{\gamma} = 200}}{1 + \left.\dfrac{\partial \log \eta_B}{\partial \log \dot{\gamma}}\right|_{\dot{\gamma} = 200}} \qquad (1)$$

wherein $\eta_L$ is the melting viscosity of linear PAS, $\eta_B$ is the melting viscosity of branched PAS, and $\dot{\gamma}$ is the shear rate,

(B) 1-59% by weight, based on the total amount of components (A) and (B), of a liquid crystalline polymer, and

(C) 5-500 parts by weight, for 100 parts by weight of the total amount of components (A) and (B), of a fibrous filler and/or a bulk filler.

The polyarylene sulfide resin composition of the present invention is provided with improved fluidity and moldability, thus remarkably reducing production of burrs during injection molding, without loss of the superior mechanical strength, heat resistance, long-term stability, and chemical resistance inherently possessed by polyarylene sulfide. It greatly contributes to the promotion of molding processability and to the improvement in outward appearance of the molded products.

The present invention is illustrated in more detail.

Polyarylene sulfide used as component (A) in the present invention has a melting viscosity of 50-40,000 poise, and preferably 500-20,000 poise. Here, the melting viscosity is the value measured by the following method.

That is, a molten resin is extruded from an orifice at a prescribed temperature and at a specified rate by using a capillary rheometer. The melting viscosity is calculated from the load required for the extrusion according to the following formula.

$$\text{Melting Viscosity} = \frac{\text{Shear Stress}}{\text{Shear Rate}}$$

wherein,

$$\text{Shear Rate (sec}^{-1}) = \frac{4 \bullet (SR)^2 \bullet \text{Extrusion Rate (mm/min)}}{10 \times 60 \times R^3}$$

$$\text{Shear Stress (dyne/cm}^2) = \frac{\text{Load (kg)} \bullet R \bullet 980 \times 10^3}{\pi \bullet (SR) \bullet 2 \bullet L}$$

wherein SR is the cylinder radius, R is the orifice radius, and L is the orifice length.

In the case of polyarylene sulfide used in the present invention, the melting viscosity is designated as the value at the shear rate of 200 $sec^{-1}$ under the conditions of a resin temperature at 300°C, an orifice radius of 0.5 mm, and an orifice length of 20 mm.

A melting viscosity less than 50 poise not only lowers the strength, but also impairs the molding processability, e. g., production of burrs in the injection molding. On the other hand, a melting viscosity greater than 40,000 poise is too high so that a high temperature is required for the injection molding, and decomposition of the resin or production of burrs tends to occur.

The polyarylene sulfides used in the present invention are those having the branch index N of larger than 1.05, preferably 1.2-2.0, and more preferably 1.4-1.8. A branch index N smaller than 1.05 lowers the non-Newtonian behavior, making it difficult to effectively prevent burrs from being produced during injection molding

There are no limitations as to the types of polyarylene sulfides. Any polyarylene sulfides satisfying the above requirements; for example, linear, branched, heat cross-linked polyarylene sulfide, as well as their mixtures, can be used.

The proportion of aromatic groups contained in the polyarylene sulfide is preferably 70 mol% or more, and more preferably 80 mol% or more. A proportion of aromatic groups smaller than 70 mol% may lower the heat melting temperature (Tm) and HDT of the polyarylene sulfide.

In addition, MI (melt index) of polyarylene sulfide is preferably 1-5,000 g/10 minutes, and particularly 10-1,000 g/10 minutes. If MI is less than 1 g/10 minutes, the moldability may be impaired; if larger than 5,000 g/10 minutes, the moldability may also be impaired, and burrs may be produced in the molded products.

Here, given as examples of polyarylene sulfides suitably used in the present invention are those having a recurring unit represented by the following formula 1:

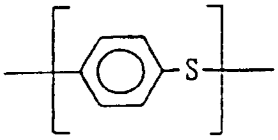

Especially preferred among the above polyarylene sulfides are those containing 70 mol% or more, preferably 80 mol% or more, of p-phenylene group in the total polyarylene sulfide, and providing a solution having a viscosity ($\eta$) of greater than 0.05 dl/g, and preferably 0.1-0.8 dl/g, wherein said solution is prepared by the addition of 0.4 g of the solute into 100 ml of $\alpha$-chloronaphthalene solvent at 205°C.

Beside polyarylene sulfides consisting of p-phenylene group, copolymers containing, for example, 30 mol% or less m-phenylene or o-phenylene can be used. Block copolymers are preferable as these copolymers.

In addition, given as other examples of polyarylene sulfides suitably used in the present invention are those containing one or more recurring units represented by the following formulae 2:

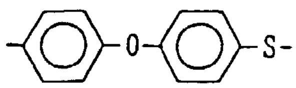

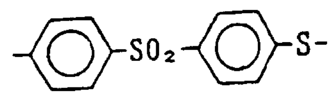

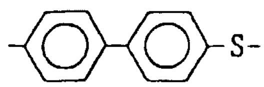

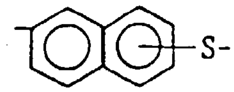

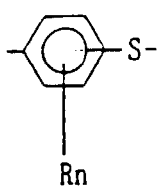

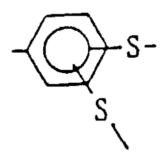

wherein R is an alkyl group having 1-6 carbon atoms and n denotes 1-4.

Polyarylene sulfides used in the present invention can be prepared by known methods. For example, as disclosed by Japanese Patent Laid-open (ko-kai) No. 294331/1990, they can be produced by a method wherein (a) at least one metal sulfide selected from the group consisting of alkali metal sulfides and alkali metal hydrogen sulfides, (b) a dihalogen aromatic compound, and (c) a polyhalogen-nitro aromatic compound are contacted in a polarized solvent, wherein the molar ratio of component (b) to component (a) [(b)/(a)] is controlled in the range of 1.03-1.25 and the molar ratio of component (c) to component (b) [(c)/(b)] is controlled in the range of 0.003-0.05. According to this method, polyarylene sulfides having stable characteristics can easily be obtained by merely controlling the polymerization system.

Said polyarylene sulfides obtained by the method described in Japanese Patent Laid-open (ko-kai) No. 294331/1990 have a high non-Newtonian property and a large branch density, and a wide molecular weight distribution, with not too large average molecular weight, in spite of their large branch density. They exhibit excellent moldability, fluidity, and heat stability and possess high whiteness without color. In addition, they produce only a very slight amount of burrs while injection molding. These polyarylene sulfides can be used by processing them into various types of molding materials. They can be suitably used as materials for molding, for example, electric and electronic parts, injection-mold precision articles, films, and the like, by further decreasing the salt content, e.g., the sodium content, of the polymer by subjecting them to various desalting treatments.

It is desirable that liquid crystal polymers used as component (B) in the present invention have high strength and high elasticity, produce only a slight amount of burrs, and exhibit excellent fluidity. Specifically, it is desirable that the polymer have 200-450°C, especially 250-400°C, of a flow initiation temperature, which is defined as the temperature to make the melting viscosity 10,000 poise calculated by the above formula from the extrusion rate, measured by using the above-mentioned capillary rheometer, when the resin is extruded from an orifice with a radius of 0.5 mm and a length of 10 mm and at a load of 10 kg/cm$^2$. If the flow initiation temperature is lower than 200°C, the liquid crystalline polymer tends to decompose. If it is higher than 450°C, the polyarylene sulfides tend to deteriorate at the temperature at which the liquid crystalline polymer melts, or the liquid crystalline polymer cannot melt at a temperature at which polyarylene sulfides melt. This may inhibits the liquid crystalline polymer from mixing into the polyarylene sulfide.

There are no limitations as to the types of the liquid crystalline polymers. Given as examples are polymers having the following structures.

(1) Liquid crystalline polyesters having the following structural units.

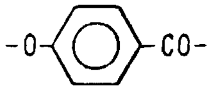, 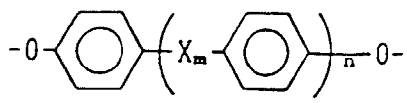 and 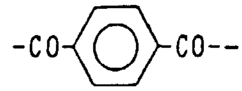

wherein m and n are 0 or 1, X represents a group selected from O, CO, $C(CH_3)_2$, $C(C_2H_5)_2$, S, SO, and $SO_2$.

(2) Liquid crystalline polyesters having the following structural units.

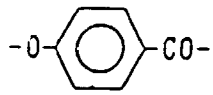 and 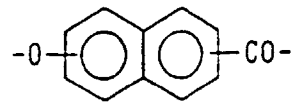

(3) Liquid crystalline polyesters having the following structural units.

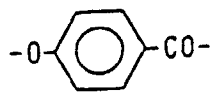, 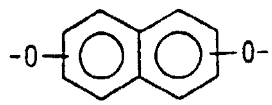 and 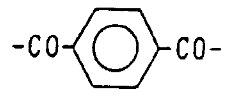

(4) Liquid crystalline polyesters having the following structural units.

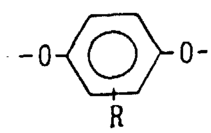, 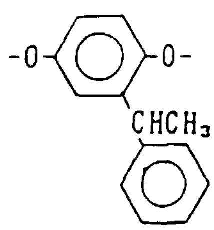 and 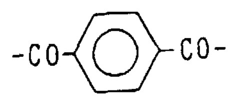

wherein R is a group selected from hydrogen, $C_1$-$C_5$ alkyl groups, and phenyl group.

(5) Liquid crystalline polyester imides having the following structural units.

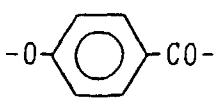, 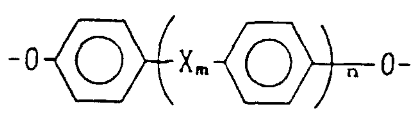, 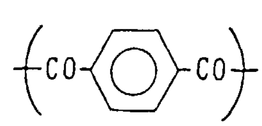

and

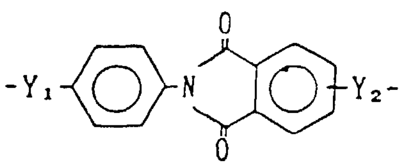 or 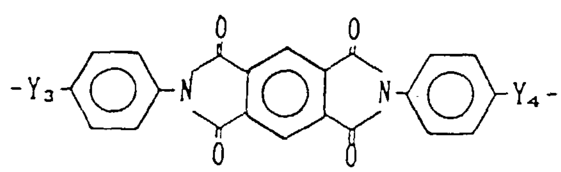

or

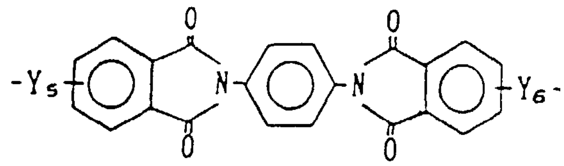

or

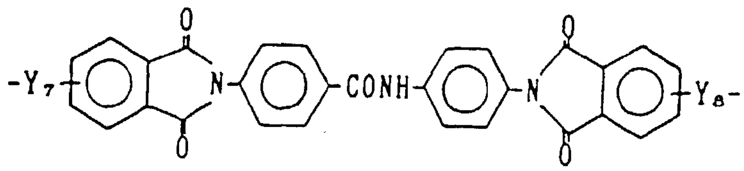

wherein m and n are 0 or 1, X represents a group selected from O, CO, and $SO_2$ and $Y_1$-$Y_8$ are O or CO, and wherein structural units are bonded each other via an ester bond wherein the molar ratio of -O- and -CO- is 9: 11-11:9.

(6) Liquid crystalline polyester imides having the following structural units.

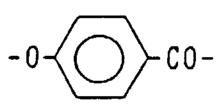 , 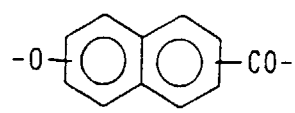 and

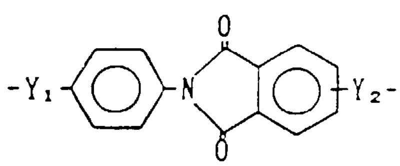 or 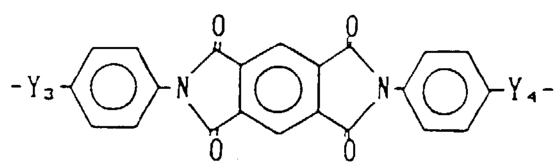

and or

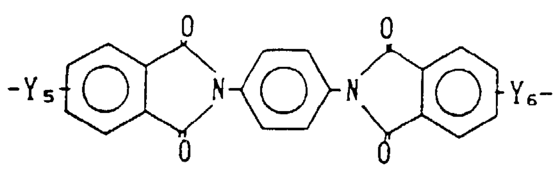

or

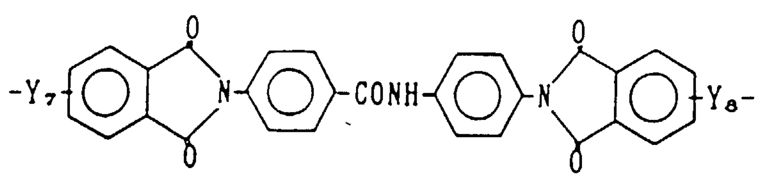

wherein $Y_1$-$Y_8$ are O or CO, and wherein structural units are bonded each other via an ester bond wherein the molar ratio of -O- and -CO- is 9:11-11:9.

(7) Liquid crystalline polyester imides having the following structural units.

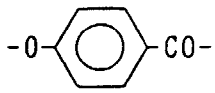 , 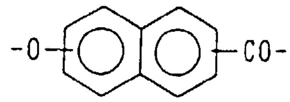 , 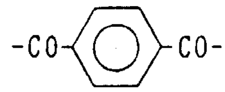

and

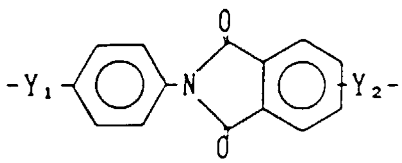 or 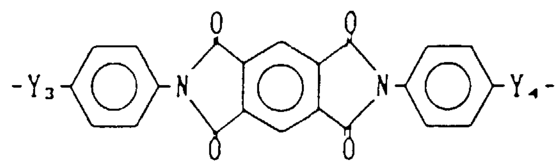

or

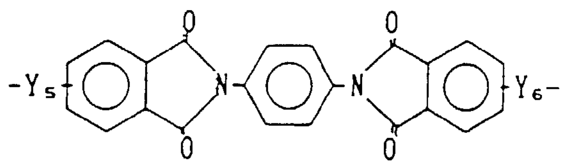

or

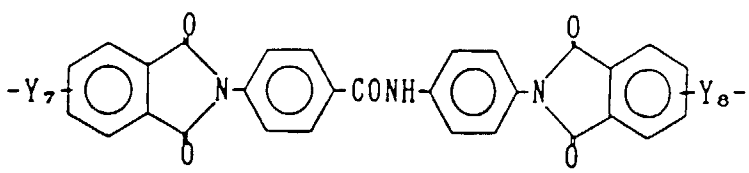

wherein $Y_1$-$Y_8$ are O or CO, and wherein structural units are bonded each other via an ester bond wherein the molar ratio of -O- and -CO- is 9:11-11:9.

(8) Liquid crystalline polyester imides having the following structural units.

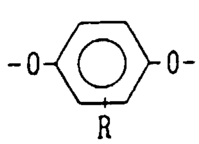 , 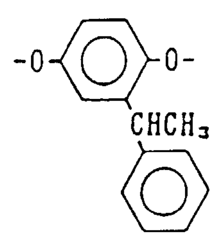 , 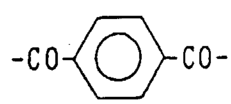

and wherein R is a group selected from hydrogen, $C_1$-$C_5$ alkyl groups, and phenyl group.

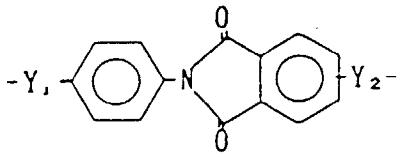 or 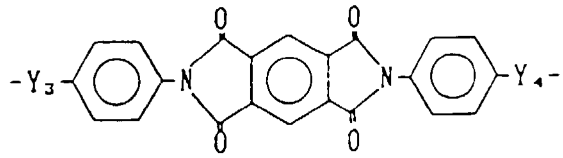

or

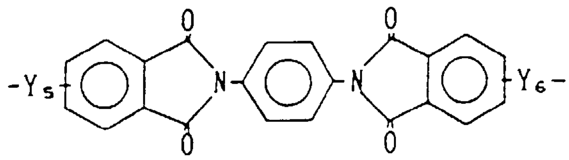

or

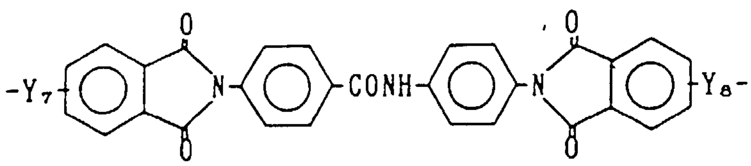

wherein $Y_1$-$Y_8$ are O or CO, and wherein structural units are bonded each other via an ester bond wherein the molar ratio of -O- and -CO- is 9:11-11:9.

In the present invention, liquid crystalline polymers prepared by known methods, for example, those described in Japanese Patent Publication (ko-koku) No. 47870/1972, 3888/1988, or 3891/1988, or Japanese Patent Laid-open (ko-kai) No. 501207/1986, 113428/1984, or 304118/1989, can be used.

An inorganic filler is suitable for use as a fibrous filler and/or a bulk filler which is component (C) of the present invention, although there are no specific restrictions imposed.

Given as examples of inorganic fillers are carbonates, e.g., calcium carbonate, magnesium carbonate, dolomite, etc.; sulfates, e.g., calcium sulfate, magnesium sulfate, etc.; sulfites, e.g., calcium sulfite, etc.; silicates, e.g., talc, clay, mica, titania, zirconia, ferrite, asbestos, glass fiber, calcium silicate, montmorillonite, bentonite, etc.; metals, e.g., iron, zinc, copper, aluminum, nickel, etc.; ceramics, e.g., silicon carbide, silicon nitride, boron nitride, etc.; whiskers, e.g., potassium titanate, alluminum borate, etc.; carbon black, grafite, carbon fiber, and the like.

These inorganic fillers can be used either singly or two or more of them may be used together.

Among the above inorganic fillers, usually, glass fiber or carbon fiber, either singly or in combination with a bulk filler incorporated therein, are preferably used.

Furthermore, as the fibrous filler and/or bulk filler, an organic filler such as, for example, wood sawdust, coconut shell sawdust, cork powder, flocks, or the like, can be used in place of said inorganic filler or together with said inorganic filler, as required.

There are no specific limitations as to the average fiber diameter or particle diameter of the fibrous fillers and/or bulk fillers. It is desirable that the average fiber diameter or particle diameter be 20 μm or smaller, although these materials having a suitable diameter can be selected depending on the use to which they are directed. If the average fiber diameter or particle diameter is greater than 20 μm, their dispersibility in the composition may decrease.

The proportion of the fibrous filler and/or bulk filler to be incorporated is 5-500 parts by weight, and preferably 10-300 parts by weight, for 100 parts by weight of the total amount of the polyarylene sulfide and the liquid crystalline polymer. If the proportion is smaller than 5 parts by weight, the effects of incorporation of the fibrous filler and/or bulk filler cannot be sufficiently exhibited; if greater than 500 parts by weight, kneading performance, dispersibility, and mechanical strength of the composition may be impaired.

**Best Mode for Carrying out the Invention**

The present invention is hereinafter described specifically by way of examples, which are not intended to be limiting thereof.

Resin compositions of Examples 1-13 and Comparative Examples 1-6 were prepared by incorporating polyarylene sulfides, liquid crystalline polymers, and fillers in proportions shown in Table 1.

In the preparation of each composition, polyphenylene sulfides prepared by the following process were used as the polyarylene sulfide, provided that a linear, high molecular weight polyphenylene sulfide (melting viscosity: 1260 poise, branch index: 1.0) was used in Comparative Example 1.

Synthesis of polyphenylene sulfides

1370 g of sodium sulfate pentahydrate, 345 g of lithium chloride, and 4160 ml of N-methylpyrrolidone (NMP) were charged into a 10 1 autoclave. After heating the mixture to 200°C under a nitrogen atmosphere, 1830 ml of a mixture of water and NMP was distilled out. The residue was cooled to 100°C, whereupon 1260 g of p-dichlorobenzene (PDCB) dissolved in 1500 ml of NMP and 12.5 g of dichloronitrobenzene (DCNB) were added, and the mixture was reacted for 3 hours at 260°C. After cooling to room temperature, the solid portion was separated, washed with 4500 ml of purified water and then with acetone, and dried under vacuum over a period of 20 hours while heating at 100°C.

The melting viscosities and branch ratios of the polyarylene sulfides were as shown in Table 1. The following methods were used for the measurement of the melting viscosities and branch ratios.

Melting viscosity

Melting viscosities at the shear rate of 200 $sec^{-1}$ were determined by using a capillary rheometer (Instrone 1125, manufactured by Instrone Co.) under the conditions of theresin temperature at 300°C, the orifice radius of 0.5 mm, and the orifice length of 20 mm.

Branch ratio

Determined from formula (1).

Furthermore, the following materials were used as liquid crystalline polymers and fillers.

Liquid crystalline polymers

All-aromatic polyesters (flow initiation temperature: 284°C and 340°C) and an all-aromatic polyester imide (flow initiation temperature: 337°C) were used.

Fibrous filler

GF: glass fiber (Glasslonchopped Strand 03MART497, manufactured by Asahi Fiberglass Co., Ltd.)

Bulk filler

Calcium carbonate: calcium carbonate (Whiten P30, manufactured by Toyo Fine Chemical Co., Ltd.).

Resin compositions of Examples 1-13 and Comparative Examples 1-6 were prepared from the above components by the following method.

Preparation of resin compositions

Components at the ratio (by weight) shown in Tables 1 and 2 were melted and mixed by a biaxial extruder to produce pellets.

Then, a burr length, spiral-flow length, and HDT were measured on each composition obtained by the methods described below. The results are shown in Tables 1 and 2.

Burr length

The length was measured by microscope on burrs produced from a 20 µm opening provided on the terminal portion of a 127 x 12.7 x 3.2 mm test strip.

Spiral-flow length

A flow length of the resin flowing from a gate with a thickness of 1 mm was measured, when the resin was molded at an injection pressure of 1,000 $kg/cm^2$

HDT

Measured according to ASTM D648 at a load of 18.6 $kg/cm^2$.

**Industrial Applicability**

As illustrated above, the polyarylene sulfide resin composition of the present invention is suitably used as a material for molding electric and electronic parts, injection-molding precision articles, films, and the like.

[TABLE 1]

| | Polyphenylene sulfide | | | Liquid crystalline polymer | | Filler | | | | |
|---|---|---|---|---|---|---|---|---|---|---|
| | Melting viscosity (poise) | Branch ratio | Amount (wt%) | Flow initiation temperature (°C) | Amount (wt%) | Kind | Amount (wt%) | Burr length (µm) | Spiral-flow length (mm) | HDT (°C) |
| Comparative Example 1 | 1260 | 1.0 | 60 | - | 0 | GF | 40 | 400 | 123 | 272 |
| Comparative Example 2 | 1790 | 1.26 | 60 | - | 0 | GF | 40 | 250 | 142 | 269 |
| Example 1 | 1790 | 1.26 | 57 | 284 | 3 | GF | 40 | 170 | 143 | 269 |
| Example 2 | 1790 | 1.26 | 54 | 284 | 6 | GF | 40 | 140 | 146 | 268 |
| Example 3 | 1790 | 1.26 | 45 | 284 | 15 | GF | 40 | 130 | 189 | 266 |
| Example 4 | 1790 | 1.26 | 36 | 284 | 24 | GF | 40 | 62 | 238 | 264 |
| Comparative Example 3 | 1350 | 1.23 | 60 | - | 0 | GF | 40 | 290 | 161 | 271 |
| Example 5 | 1350 | 1.23 | 57 | 337 | 3 | GF | 40 | 190 | 165 | 272 |
| Example 6 | 1350 | 1.23 | 54 | 337 | 6 | GF | 40 | 140 | 165 | 270 |
| Example 7 | 1350 | 1.23 | 45 | 337 | 15 | GF | 40 | 120 | 205 | 269 |
| Example 8 | 1350 | 1.23 | 36 | 337 | 24 | GF | 40 | 89 | 254 | 265 |

[TABLE 2]

| | Polyphenylene sulfide | | | Liquid crystalline polymer | | Filler | | | | |
|---|---|---|---|---|---|---|---|---|---|---|
| | Melting viscosity (poise) | Branch ratio | Amount (wt%) | Flow initiation temperature (°C) | Amount (wt%) | Kind | Amount (wt%) | Burr length (μm) | Spiral-flow length (mm) | HDT (°C) |
| Comparative Example 4 | 3338 | 1.33 | 60 | - | 0 | GF | 40 | 120 | 109 | 267 |
| Example 9 | 3338 | 1.33 | 54 | 340 | 6 | GF | 40 | 110 | 131 | 265 |
| Comparative Example 5 | 5720 | 1.42 | 60 | - | 0 | GF | 40 | 66 | 91 | 269 |
| Example 10 | 5720 | 1.42 | 54 | 340 | 6 | GF | 40 | 63 | 115 | 256 |
| Comparative Example 6 | 1790 | 1.26 | 40 | - | 0 | GF | 30 | 250 | 78 | 271 |
| | | | | | | Calcium carbonate | 30 | | | |
| Example 11 | 1790 | 1.26 | 38 | 284 | 2 | GF | 30 | 140 | 80 | 270 |
| | | | | | | Calcium carbonate | 30 | | | |
| Example 12 | 1790 | 1.26 | 36 | 284 | 4 | GF | 30 | 130 | 83 | 269 |
| | | | | | | Calcium carbonate | 30 | | | |
| Example 13 | 1790 | 1.26 | 30 | 284 | 10 | GF | 30 | 130 | 100 | 265 |
| | | | | | | Calcium carbonate | 30 | | | |

## Claims

**1.** A polyarylene sulfide resin composition characterized by comprising the following components (A), (B), and (C):

(A) 99-41% by weight, based on the total amount of components (A) and (B), of polyarylene sulfide having a melting viscosity of 50-40,000 poise and a branch index (N) of 1.05 or above as defined by the following formula (1),

$$N = \frac{1 + \left.\dfrac{\partial \log \eta_L}{\partial \log \dot{\gamma}}\right|_{\dot{\gamma} = 200}}{1 + \left.\dfrac{\partial \log \eta_B}{\partial \log \dot{\gamma}}\right|_{\dot{\gamma} = 200}} \qquad (1)$$

wherein $\eta_L$ is the melting viscosity of linear PAS, $\eta_B$ is the melting viscosity of branched PAS, and $\dot{\gamma}$ is a shear rate,
(B) 1-59% by weight, based on the total amount of components (A) and (B), of a liquid crystalline polymer, and
(C) 5-500 parts by weight, for 100 parts by weight of the total amount of components (A) and (B), of a fibrous filler and/or a bulk filler.

**2.** The polyarylene sulfide resin composition according to Claim 1, wherein the melting viscosity of said polyarylene sulfide used as component (A) is 500-20,000 poise.

**3.** The polyarylene sulfide resin composition according to Claim 1 or 2, wherein the branch index of said polyarylene sulfide used as component (A), as shown by said formula (1), is 1.2-2.0.

**4.** The polyarylene sulfide resin composition according to Claim 1, 2, or 3, wherein the proportion of aromatic groups in said polyarylene sulfide used as component (A) is 70 mol% or more.

**5.** The polyarylene sulfide resin composition according to Claim 1, 2, 3, or 4, wherein the melt index of said polyarylene sulfide used as component (A) is 1-5,000 g/10 minutes.

**6.** The polyarylene sulfide resin composition according to Claim 1, 2, 3, 4, or 5, wherein said polyarylene sulfide used as component (A) has a recurring unit represented by the following formula 1:

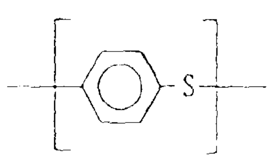

**7.** The polyarylene sulfide resin composition according to Claim 1, 2, 3, 4, or 5, wherein said polyarylene sulfide used as component (A) has recurring unit represented by the following formulae 2:

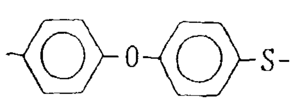

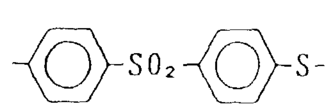

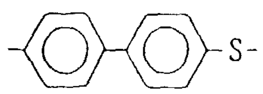

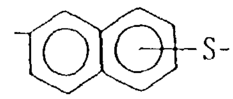

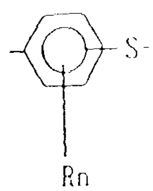

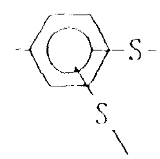

wherein R represents an alkyl group having 1 to 6 carbon atoms and n denotes 1 to 4.

**8.** The polyarylene sulfide resin composition according to Claim 1, wherein said liquid crystalline polymer used as component (B) has a fluid initiation temperature, defined as the temperature to make the melting viscosity 10,000 poise, of 200-450°C.

**Patentansprüche**

**1.** Polyarylensulfidharzzusammensetzung, dadurch gekennzeichnet, daß sie die folgenden Komponenten (A), (B) und (C) umfaßt:

(A) 99 bis 41 Gew.%, basierend auf dem Gesamtgehalt der Komponenten (A) und (B) an Polyarylensulfid, mit einer Schmelzviskosität von 50 bis 40.000 P und einem Verzweigungsindex (N) von 1,05 oder mehr gemäß der folgenden Formel (1):

$$N = \frac{1 + \left. \frac{\partial \log \eta_L}{\partial \log \dot{\gamma}} \right|_{\dot{\gamma} = 200}}{1 + \left. \frac{\partial \log \eta_B}{\partial \log \dot{\gamma}} \right|_{\dot{\gamma} = 200}} \qquad (1)$$

worin $\eta_L$ die Schmelzviskosität von linearem PAS, $\eta_B$ die Schmelzviskosität von verzweigtem PAS und $\dot{\gamma}$ die Scherrate ist;

(B) 1 bis 59 Gew.%, basierend auf dem Gesamtgehalt der Komponenten (A) und (B) eines flüssigkristallinen Polymeren; und

(C) 5 bis 500 Gewichtsteile auf 100 Gewichtsteile des Gesamtgehalts der Komponenten (A) und (B) eines faserförmigen Füllstoffes und/oder eines granularen Füllstoffes .

**2.** Polyarylensulfidharzzusammensetzung gemäß Anspruch 1, worin die Schmelzviskosität des Polyarylensulfids, welches als Komponente (A) verwendet wird, 500 bis 20.000 P beträgt.

**3.** Polyarylensulfidharzzusammensetzung gemäß Anspruch 1 oder 2, worin der Verzweigungsindex des als Komponente (A) verwendeten Polyarylensulfids gemäß Formel (1) 1,2 bis 2,0 beträgt.

**4.** Polyarylensulfidharzzusenunensetzung gemäß Anspruch 1, 2 oder 3, worin der Anteil an aromatischen Gruppen in dem als Komponente (A) verwendeten Polyarylensulfid 70 mol% oder mehr beträgt.

**5.** Polyarylensulfidharzzusammensetzung gemäß einem der Ansprüche 1, 2, 3 oder 4, worin der Schmelzindex des als Komponente (A) verwendeten Polyarylensulfids 1 bis 5.000 g/10 min beträgt.

**6.** Polyarylensulfidharzzusammensetzung gemäß einem der Ansprüche 1, 2, 3, 4 oder 5, worin das als Komponente (A) verwendete Polyarylensulfid eine Struktureinheit gemäß der folgenden Formel 1 aufweist:

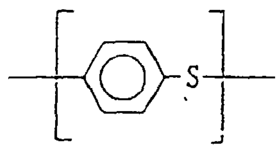

**7.** Polyarylensulfidharzzusammensetzung gemäß einem der Ansprüche 1, 2, 3, 4 oder 5, worin das als Komponente (A) verwendete Polyarylensulfid eine Struktureinheit gemäß den folgenden Formeln 2 aufweist:

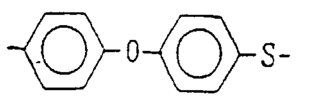

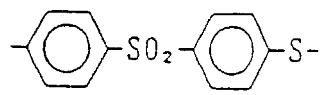

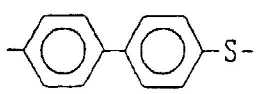

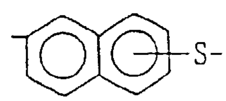

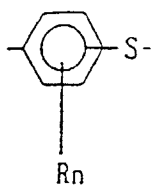

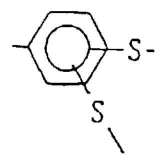

worin R eine Alkylgruppe mit 1 bis 6 Kohlenstoffatomen repräsentiert und worin n 1 bis 4 bedeutet.

**8.** Polyarylensulfidharzzusammensetzung nach Anspruch 1, worin das Flüssigkristallpolymer, das als Komponente (B) verwendet wird, eine Verflüssigungsbeginn-Temperatur von 200 bis 450° C aufweist, welche als Temperatur definiert ist, die die Schmelzviskosität auf 10.000 P bringt.

**Revendications**

**1.** Composition de résine en sulfure de polyarylène, caractérisée en ce qu'elle comprend les composants (A), (B) et (C) suivants:

(A) de 99 à 41 % en poids, basés sur la quantité totale des composants (A) et (B), de sulfure de polyarylène ayant une viscosité à l'état fondu de 50 à 40 000 poises et un indice de ramification (N) de 1,05 ou au-dessus, comme défini par la formule (1) suivante,

$$N = \frac{1 + \left.\dfrac{\delta \log\eta_L}{\delta \log\gamma^*}\right|_{\gamma^* = 200}}{1 + \left.\dfrac{\delta \log\eta_B}{\delta \log\gamma^*}\right|_{\gamma^* = 200}} \qquad (1)$$

où $\eta_L$ est la viscosité à l'état fondu du PAS linéaire, $\eta_B$ est la viscosité à l'état fondu du PAS ramifié, et $\gamma^*$ est le taux de cisaillement,

(B) de 1 à 59 % en poids, basés sur la quantité totale de composants (A) et (B), d'un polymère à cristaux liquides, et

(C) de 5 à 500 parties en poids, pour 100 parties en poids de la quantité totale des composants (A) et (B), d'une charge fibreuse et/ou d'une charge en vrac.

**2.** Composition de résine en sulfure de polyarylène selon la revendication 1, où la viscosité à l'état fondu dudit sulfure de polyarylène utilisé comme composant (A) est de 500-20 000 poises.

**3.** Composition de résine en sulfure de polyarylène selon la revendication 1 ou 2, où l'indice de ramification dudit sulfure de polyarylène utilisé comme composant (A), comme montré par ladite formule (1), est de 1,2-2,0.

**4.** Composition de résine en sulfure de polyarylène selon la revendication 1, 2 ou 3, où la proportion de groupes aromatiques dans ledit sulfure de polyarylène utilisé comme composant (A) est de 70 moles % ou plus.

**5.** Composition de résine en sulfure de polyarylène selon la revendication 1, 2, 3 ou 4, où l'indice de fusion (melt index) dudit sulfure de polyarylène utilisé comme composant (A) est de 1-5000 g/10 minutes.

**6.** Composition de résine en sulfure de polyarylène selon la revendication 1, 2, 3, 4 ou 5, où ledit sulfure de polyarylène utilisé comme composant (A) a une unité récurrente représentée par la formule 1 suivante :

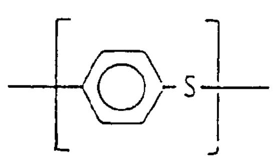

**7.** Composition de résine en sulfure de polyarylène selon la revendication 1, 2, 3, 4 ou 5, où ledit sulfure de polyarylène utilisé comme composant (A) a une unité récurrente représentée par les formules 2 suivantes:

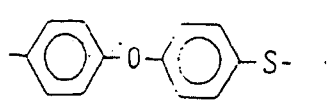

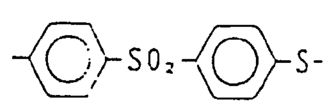

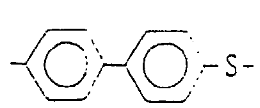

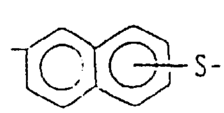

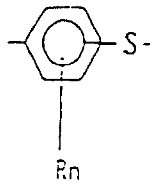

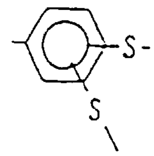

où R représente un groupe alkyle ayant de 1 à 6 atomes de carbone et n représente de 1 à 4.

**8.** Composition de résine en sulfure de polyarylène selon la revendication 1, où ledit polymère à cristaux liquides utilisé comme composant (B) a une température de début de fluide, définie comme la température pour avoir la viscosité à l'état fondu de 10 000 poises, de 200-450°C.